# EUROPEAN PATENT APPLICATION

(11) **EP 4 336 254 A1**
(43) Date of publication of application: **13.03.2024**
(21) Application number: 22846074.7
(22) Date of filing: 29.06.2022
(51) Int. Cl.: G03B 13/36, G03B 3/00, G03B 17/02, H04N 23/00

(54) **CAMERA MODULE AND ELECTRONIC DEVICE COMPRISING SAME**

(30) Priority: 20.07.2021 KR 20210095164
(71) Applicant: Samsung Electronics Co., Ltd., Suwon-si, Gyeonggi-do 16677 (KR)
(72) Inventor: MOON, Chanyoung, Suwon-si, Gyeonggi-do 16677 (KR)
(74) Representative: Gulde & Partner
(86) International application number: PCT/KR2022/009326
(87) International publication number: WO 2023/003202

(57) **Abstract**

Disclosed is a camera module. The camera module includes: a camera housing, a first carrier that is at least partially disposed in the camera housing and configured to move in a direction of an optical axis, a second carrier at least partially disposed in the first carrier and including a lens assembly, the second carrier configured to move together with the first carrier in the direction of the optical axis based on an auto focus function being performed and to move relative to the first carrier in at least one direction perpendicular to the optical axis based on an image stabilization function being performed, and a damping structure configured to provide damping to the movement of the second carrier based on the image stabilization function being performed.

## Description

### [Technical Field]

The disclosure relates to a camera module and an electronic device including the same.

### [Background Art]

A camera module included in a mobile electronic device may be configured to perform an auto focus function (e.g., auto focus (AF)) and an image correction function (e.g., optical image stabilization (OIS), digital image stabilization (DIS), or electrical image stabilization (EIS)). The auto focus function may be performed by moving a structure including a lens assembly in the direction of an optical axis. The image correction function may be performed by moving the structure including the lens assembly in at least one direction perpendicular to the optical axis. To this end, the camera module may include associated coils and magnets. The coils may electromagnetically interact with the magnets, respectively, to provide a driving force in the direction of the optical axis or in a direction perpendicular to the optical axis.

### [Disclosure]

### [Technical Problem

The lens assembly may move in a direction substantially perpendicular to the optical axis when the image correction function of the camera module is performed. At this time, driving forces may be applied to the structure including the lens assembly in two directions perpendicular to each other. The lens assembly may be unintentionally rotated by the driving forces applied in the two directions. The unintentional rotary motion may make it difficult to accurately control the position of the lens assembly and may degrade image correction performance.

Embodiments of the disclosure provide a camera module including a damping structure for attenuating a moment component of a lens assembly when an image correction function is performed.

### [Technical Solution]

A camera module according to an example embodiment of the disclosure includes: a camera housing, a first carrier at least partially disposed in the camera housing and configured to move in a direction of an optical axis, a second carrier at least partially disposed in the first carrier including a lens assembly, the second carrier configured to move together with the first carrier in the direction of the optical axis based on an auto focus function being performed and to move relative to the first carrier in at least one direction perpendicular to the optical axis based on an image stabilization function being performed, and a damping structure comprising a damper configured to provide damping to the movement of the second carrier based on the image stabilization function being performed. The damping structure comprises a damper including: a stopper disposed on an upper surface of the first carrier, a damping material located on a first surface of the second carrier at least partially facing the upper surface, and a protrusion extending from the stopper to be at least partially coupled to the damping material.

### [ Advantageous Effects]

The camera module according to the various example embodiments of the disclosure may include the damping structure that provides damping between the OIS carrier and the AF carrier, and thus an unintentional moment component acting on the lens assembly may be attenuated. Accordingly, the position of the lens assembly may be more accurately controlled, and improved image correction performance may be ultimately provided.

In addition, the disclosure may provide various effects that are directly or indirectly recognized.

### [ Description of Drawings]

The above and other aspects, features and advantages of certain embodiments of the present disclosure will be more apparent from the following detailed description, taken in conjunction with the accompanying drawings, in which:
FIG. 1 is a block diagram of an electronic device in a network environment according to various embodiments.
FIG. 2 is a block diagram illustrating a camera module according to various embodiments.
FIG. 3A is a front perspective view of an electronic device according to an embodiment.
FIG. 3B is a rear perspective view of the electronic device according to an embodiment.
FIG. 3C is an exploded perspective view of the electronic device according to an embodiment.
FIG. 4 is a perspective view of a camera module according to an embodiment.
FIGS. 5A and 5B are sectional views of the camera module according to an embodiment.
FIGS. 6A, 6B, and 6C are views illustrating a first damping structure of the camera module according to an embodiment.
FIGS. 7A, 7B, and 7C are views illustrating a second damping structure of the camera module according to various embodiments;
FIGS. 8A and 8B are views illustrating a damping structure of the camera module according to various embodiments;
FIGS. 9A and 9B are views illustrating a damping structure of the camera module according to various embodiments;
FIGS. 10A, 10B, and 10C are views illustrating a damping structure of the camera module according to various embodiments.
FIGS. 11A and 11B are views illustrating camera modules according to various embodiments.
FIG. 12 is a view illustrating a buffer function of a damping structure of a camera module according to an embodiment.
FIG. 13 is a plan view of a camera module according to various embodiments.
FIG. 14 is a sectional view of the camera module according to various embodiments.
FIGS. 15A, 15B and 15C are perspective views illustrating a first carrier and a second carrier of the camera module according to various embodiments.
FIG. 16 is a view illustrating a damping structure of a camera module according to various embodiments.

With regard to description of the drawings, identical or similar reference numerals may be used to refer to identical or similar components.

### [ Mode for Invention]

Hereinafter, various example embodiments of the disclosure may be described with reference to accompanying drawings. Accordingly, those of ordinary skill in the art will recognize that modifications, equivalents, and/or alternatives on the various example embodiments described herein can be variously made without departing from the scope and spirit of the disclosure.

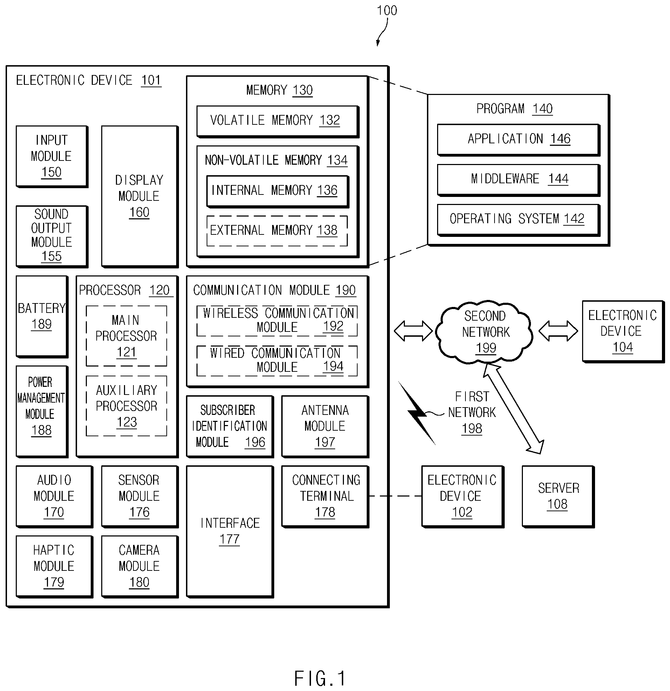

FIG. 1 is a block diagram of an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

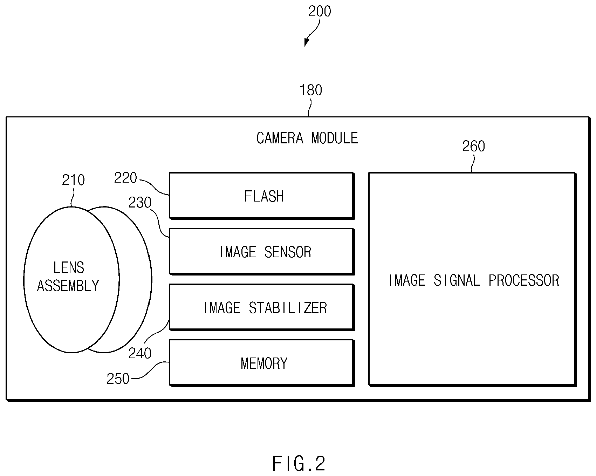

FIG. 2 is a block diagram 200 illustrating the camera module 180 according to various embodiments.

Referring to FIG. 2, the camera module 180 may include a lens assembly 210, a flash 220, an image sensor 230, an image stabilizer 240, memory 250 (e.g., buffer memory), or an image signal processor 260.

The lens assembly 210 may collect light emitted or reflected from an object whose image is to be taken. The lens assembly 210 may include one or more lenses. According to an embodiment, the camera module 180 may include a plurality of lens assemblies 210. In such a case, the camera module 180 may form, for example, a dual camera, a 360-degree camera, or a spherical camera. Some of the plurality of lens assemblies 210 may have the same lens attribute (e.g., view angle, focal length, autofocusing, f number, or optical zoom), or at least one lens assembly may have one or more lens attributes different from those of another lens assembly. The lens assembly 210 may include, for example, a wide-angle lens or a telephoto lens.

The flash 220 may emit light that is used to reinforce light reflected from an object. According to an embodiment, the flash 220 may include one or more light emitting diodes (LEDs) (e.g., a red-green-blue (RGB) LED, a white LED, an infrared (IR) LED, or an ultraviolet (UV) LED) or a xenon lamp.

The image sensor 230 may obtain an image corresponding to an object by converting light emitted or reflected from the object and transmitted via the lens assembly 210 into an electrical signal. According to an embodiment, the image sensor 230 may include one selected from image sensors having different attributes, such as a RGB sensor, a black-and-white (BW) sensor, an IR sensor, or a UV sensor, a plurality of image sensors having the same attribute, or a plurality of image sensors having different attributes. Each image sensor included in the image sensor 230 may be implemented using, for example, a charged coupled device (CCD) sensor or a complementary metal oxide semiconductor (CMOS) sensor.

The image stabilizer 240 may move the image sensor 230 or at least one lens included in the lens assembly 210 in a particular direction, or control an operational attribute (e.g., adjust the read-out timing) of the image sensor 230 in response to the movement of the camera module 180 or the electronic device 101 including the camera module 180. This allows compensating for at least part of a negative effect (e.g., image blurring) by the movement on an image being captured. According to an embodiment, the image stabilizer 240 may sense such a movement by the camera module 180 or the electronic device 101 using a gyro sensor (not shown) or an acceleration sensor (not shown) disposed inside or outside the camera module 180. According to an embodiment, the image stabilizer 240 may be implemented, for example, as an optical image stabilizer.

The memory 250 may store, at least temporarily, at least part of an image obtained via the image sensor 230 for a subsequent image processing task. For example, if image capturing is delayed due to shutter lag or multiple images are quickly captured, a raw image obtained (e.g., a Bayer-patterned image, a high-resolution image) may be stored in the memory 250, and its corresponding copy image (e.g., a low-resolution image) may be previewed via the display module 160. Thereafter, if a specified condition is met (e.g., by a user's input or system command), at least part of the raw image stored in the memory 250 may be obtained and processed, for example, by the image signal processor 260. According to an embodiment, the memory 250 may be configured as at least part of the memory 130 or as a separate memory that is operated independently from the memory 130.

The image signal processor 260 may include various processing circuitry and perform one or more image processing with respect to an image obtained via the image sensor 230 or an image stored in the memory 250. The one or more image processing may include, for example, depth map generation, three-dimensional (3D) modeling, panorama generation, feature point extraction, image synthesizing, or image compensation (e.g., noise reduction, resolution adjustment, brightness adjustment, blurring, sharpening, or softening). Additionally or alternatively, the image signal processor 260 may perform control (e.g., exposure time control or read-out timing control) with respect to at least one (e.g., the image sensor 230) of the components included in the camera module 180. An image processed by the image signal processor 260 may be stored back in the memory 250 for further processing, or may be provided to an external component (e.g., the memory 130, the display module 160, the electronic device 102, the electronic device 104, or the server 108) outside the camera module 180.

According to an embodiment, the image signal processor 260 may be configured as at least part of the processor 120, or as a separate processor that is operated independently from the processor 120. If the image signal processor 260 is configured as a separate processor from the processor 120, at least one image processed by the image signal processor 260 may be displayed, by the processor 120, via the display module 160 as it is or after being further processed..

According to an embodiment, the electronic device 101 may include a plurality of camera modules 180 having different attributes or functions. In such a case, at least one of the plurality of camera modules 180 may form, for example, a wide-angle camera and at least another of the plurality of camera modules 180 may form a telephoto camera. Similarly, at least one of the plurality of camera modules 180 may form, for example, a front camera and at least another of the plurality of camera modules 180 may form a rear camera.

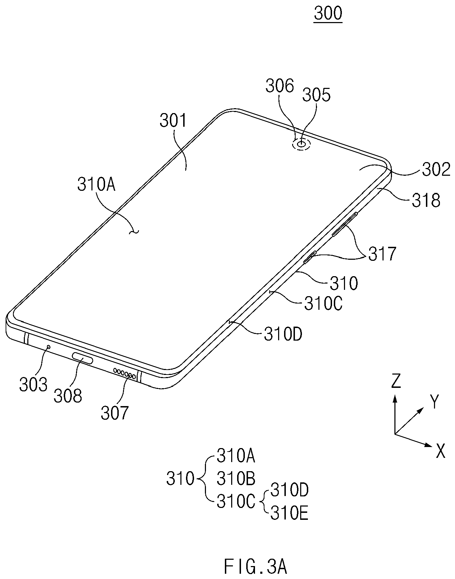

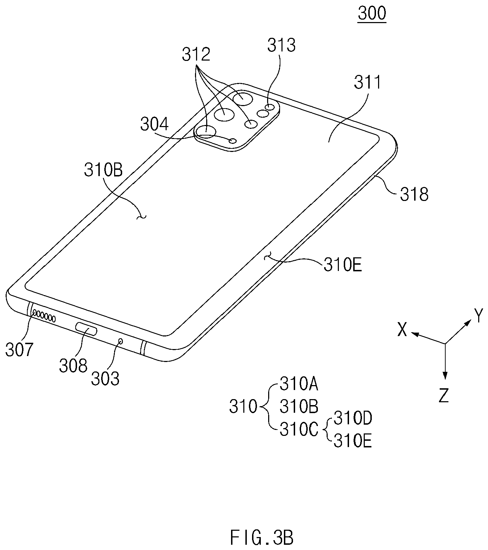

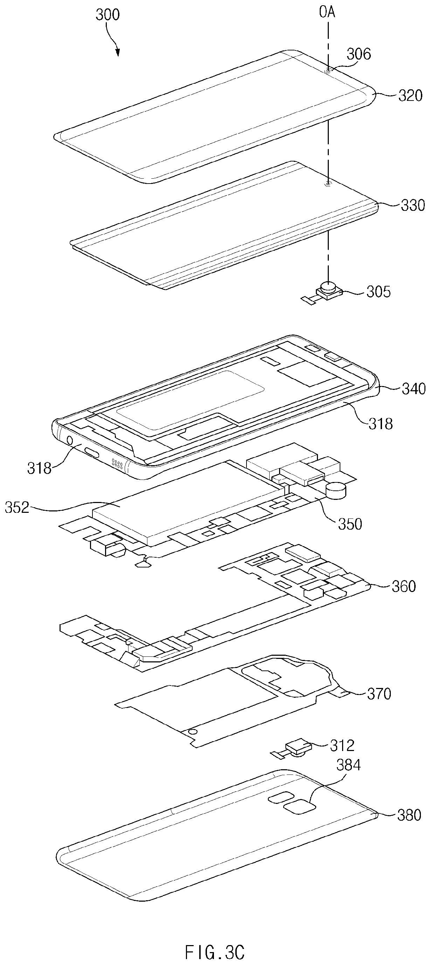

FIG. 3A is a front perspective view of an electronic device 300 according to an embodiment. FIG. 3B is a rear perspective view of the electronic device 300 according to an embodiment. FIG. 3C is an exploded perspective view of the electronic device 300 according to an embodiment.

Referring to FIGS. 3A and 3B, the electronic device 300 may include a housing 310 that includes a first surface (or, a front surface) 310A, a second surface (or, a rear surface) 310B, and a side surface 310C surrounding a space between the first surface 310A and the second surface 310B.

In another embodiment (not illustrated), the housing 310 may refer to a structure that forms some of the first surface 310A, the second surface 310B, and the side surface 310C.

In an embodiment, the first surface 310A may be formed by a front plate 302 (e.g., a front plate 320 of FIG. 3C), at least a portion of which is substantially transparent. The front plate 302 may include a glass plate including various coating layers or a polymer plate. In an embodiment, the second surface 310B may be formed by a back plate 311 (e.g., a back plate 380 of FIG. 3C) that is substantially opaque. The back plate 311 may be formed of, for example, coated or colored glass, ceramic, a polymer, metal (e.g., aluminum, stainless steel (STS), or magnesium), or a combination of at least two of the aforementioned materials. The side surface 310C may be formed by a side bezel structure 318 that is coupled with the front plate 302 and the back plate 311 and that contains metal and/or a polymer.

In another embodiment, the back plate 311 and the side bezel structure 318 may be integrally formed with each other and may contain the same material (e.g., a metallic material such as aluminum).

In the illustrated embodiment, the front plate 302 may include two first areas 310D that curvedly and seamlessly extend from partial areas of the first surface 310A toward the back plate 311. The first areas 310D may be located at opposite long edges of the front plate 302.

In the illustrated embodiment, the back plate 311 may include two second areas 310E that curvedly and seamlessly extend from partial areas of the second surface 310B toward the front plate 302. The second areas 310E may be located at opposite long edges of the back plate 311.

In another embodiment, the front plate 302 (or, the back plate 311) may include only one of the first areas 310D (or, the second areas 310E). Furthermore, in another embodiment, the front plate 302 (or, the back plate 311) may not include a part of the first areas 310D (or, the second areas 310E).

In an embodiment, when viewed from a side of the electronic device 300, the side bezel structure 318 may have a first thickness (or, width) at sides (e.g., short sides) not including the first areas 310D or the second areas 310E and may have a second thickness at sides (e.g., long sides) including the first areas 310D or the second areas 310E, the second thickness being smaller than the first thickness.

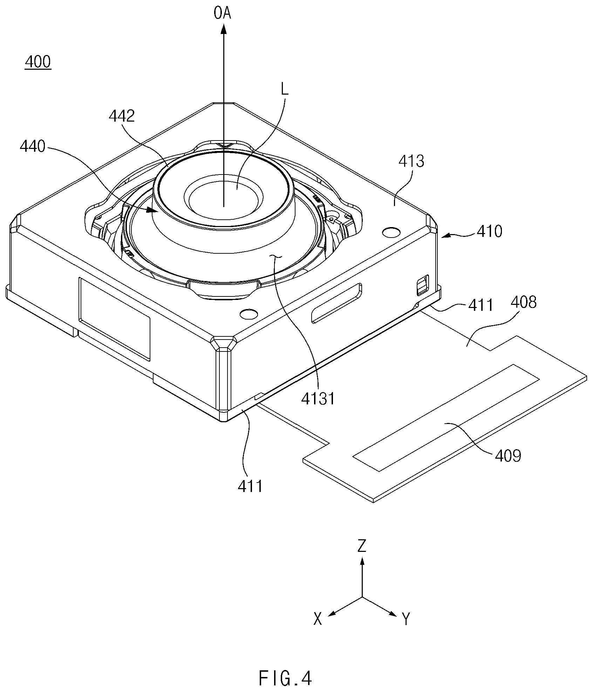

In an embodiment, the electronic device 300 may include at least one of a display 301 (e.g., the display module 160 of FIG. 1), audio modules 303, 304, and 307 (e.g., the audio module 170 of FIG. 1), a sensor module (not illustrated) (e.g., the sensor module 176 of FIG. 1), camera modules 305 and 312 (e.g., the camera module 180 of FIG. 1 or a camera module 400 of FIG. 4), key input devices 317 (e.g., the input module 150 of FIG. 1), a light emitting element (not illustrated), or a connector hole 308 (e.g., the connecting terminal 178 of FIG. 1). In another embodiment, at least one component (e.g., the key input devices 317 or the light emitting element (not illustrated)) among the aforementioned components may be omitted from the electronic device 300, or other component(s) may be additionally included in the electronic device 300.

In an embodiment, the display 301 may be visible through at least a portion of the front plate 302. For example, at least a portion of the display 301 may be visible through the front plate 302 that includes the first surface 310A and the first areas 310D of the side surface 310C.

In an embodiment, the shape of the display 301 may be formed to be substantially the same as or similar to the shape of the adjacent outside edge of the front plate 302. In another embodiment (not illustrated), to expand the area by which the display 301 is visible, the gap between the periphery of the display 301 and the periphery of the front plate 302 may be substantially constant.

In an embodiment, a surface of the housing 310 (or, the front plate 302) may include a display area through which the display 301 is visually exposed (e.g., visible) and on which contents are displayed through pixels. For example, the display area may include the first surface 310A and the first areas 310D of the side surface.

In another embodiment (not illustrated), the display area 310A and 310D may include a sensing area (not illustrated) that is configured to obtain biometric information of a user. When the display area 310A and 310D includes the sensing area, this may refer, for example, to at least a portion of the sensing area overlapping the display area 310A and 310D. For example, the sensing area (not illustrated) may refer to an area capable of displaying contents by the display 301 like the other areas of the display area 310A and 310D and additionally obtaining biometric information (e.g., a fingerprint) of the user.

In an embodiment, the display area 310A and 310D of the display 301 may include a camera area 306. For example, the camera area 306 may be an area through which light reflected from an object and received to the first camera module 305 passes. For example, the camera area 306 may include an area through which the optical axis of the first camera module 305 (e.g., an optical axis OA of FIG. 4) passes. When the display area 310A and 310D includes the camera area 306, this may refer, for example, to at least a portion of the camera area 306 overlapping the display area 310A and 310D. For example, likewise to the other areas of the display area 310A and 310D, the camera area 306 may display contents by the display 301.

In various embodiments (not illustrated), the screen display area 310A and 310D of the display 301 may include an area through which the first camera module 305 (e.g., a punch hole camera) is visually exposed. For example, at least a portion of the periphery of the area through which the first camera module 305 is exposed may be surrounded by the screen display area 310A and 310D. In an embodiment, the first camera module 305 may include a plurality of camera modules (e.g., the camera module 180 of FIG. 1 and the camera module 400 of FIG. 4).

In an embodiment, the display 301 may include, on the rear surface of the screen display area 310A and 310D, at least one of the audio modules 303, 304, and 307, the sensor module (not illustrated), a camera module (e.g., the first camera module 305), or the light emitting element (not illustrated). For example, the electronic device 300 may include the camera module (e.g., the first camera module 305) disposed on the rear side (e.g., the side facing the -Z-axis direction) of the first surface 310A (e.g., the front surface) and/or the side surface 310C (e.g., at least one surface of the first areas 310D) to face toward the first surface 310A and/or the side surface 310C. For example, the first camera module 305 may include an under display camera (UDC) that is hidden without being visually exposed on the screen display area 310A and 310D.

In another embodiment (not illustrated), the display 301 may include, or may be disposed adjacent to, touch detection circuitry, a pressure sensor for measuring the intensity (pressure) of a touch, and/or a digitizer for detecting a stylus pen of a magnetic field type.

In an embodiment, the audio modules 303, 304, and 307 may include the microphone holes 303 and 304 and the speaker hole 307.

In an embodiment, the microphone holes 303 and 304 may include the first microphone hole 303 formed in a partial area of the side surface 310C and the microphone hole 304 formed in a partial area of the second surface 310B. Microphones for obtaining external sounds may be disposed in the housing 310 to correspond to the microphone holes 303 and 304. The microphones may each include a plurality of microphones to detect the direction of sound. In an embodiment, the second microphone hole 304 formed in the partial area of the second surface 310B may be disposed adjacent to the camera modules 305 and 312. For example, the second microphone hole 304 may obtain sounds when the camera modules 305 and 312 are executed, or may obtain sounds when other functions are executed.

In an embodiment, the speaker hole 307 may include a receiver hole for telephone call (not illustrated). The speaker hole 307 may be formed in a portion of the side surface 310C of the electronic device 300. In another embodiment, the speaker hole 307, together with the microphone hole 303, may be implemented as a single hole. Although not illustrated, the receiver hole for telephone call (not illustrated) may be formed in another portion of the side surface 310C. For example, the receiver hole for telephone call (not illustrated) may be formed in another portion (e.g., a portion facing the +Y-axis direction) of the side surface 310C that faces the portion (e.g., a portion facing the -Y-axis direction) of the side surface 310C in which the speaker hole 307 is formed.

In an embodiment, the electronic device 300 may include a speaker fluidly connected with the speaker hole 307. In another embodiment, the speaker may include a piezoelectric speaker that does not have the speaker hole 307.

In an embodiment, the sensor module (not illustrated) (e.g., the sensor module 176 of FIG. 1) may generate an electrical signal or a data value that corresponds to an operational state inside the electronic device 300 or an environmental state external to the electronic device 300. In an embodiment, the sensor module (not illustrated) may be disposed on at least a part of the first surface 310A, the second surface 310B, or the side surfaces 310C (e.g., the first areas 310D and/or the second areas 310E) of the housing 310 and may be disposed on the rear surface of the display 301 (e.g., a fingerprint sensor). For example, at least a portion of the sensor module (not illustrated) may be disposed under the display area 310A and 310D and may not be visually exposed, and the sensing area (not illustrated) may be formed in at least a portion of the display area 310A and 310D. For example, the sensor module (not illustrated) may include an optical fingerprint sensor. In some embodiments (not illustrated), the fingerprint sensor may be disposed on the second surface 310B as well as the first surface 310A of the housing 310 (e.g., the screen display area 310A and 310D). For example, the sensor module may include at least one of a proximity sensor, an HRM sensor, a fingerprint sensor, a gesture sensor, a gyro sensor, an atmospheric pressure sensor, a magnetic sensor, an acceleration sensor, a grip sensor, a color sensor, an infrared (IR) sensor, a biosensor, a temperature sensor, a humidity sensor, or an illuminance sensor.

In an embodiment, the key input devices 317 may be disposed on the side surface 310C of the housing 310 (e.g., the first areas 310D and/or the second areas 310E). In another embodiment, the electronic device 300 may not include all or some of the key input devices 317, and the key input devices 317 not included may be implemented in a different form, such as a soft key, on the display 301. In another embodiment, the key input devices may include a sensor module (not illustrated) that forms the sensing area (not illustrated) that is included in the display area 310A and 310D.

In an embodiment, the connector hole 308 may accommodate a connector. The connector hole 308 may be disposed in the side surface 310C of the housing 310. For example, the connector hole 308 may be disposed in the side surface 310C so as to be adjacent to at least a part of the audio modules (e.g., the microphone hole 303 and the speaker hole 307). In another embodiment, the electronic device 300 may include the first connector hole 308 capable of accommodating a connector (e.g., a USB connector) for transmitting/receiving power and/or data with an external electronic device, and/or a second connector hole (not illustrated) capable of accommodating a connector (e.g., an earphone jack) for transmitting/receiving audio signals with an external electronic device.

In an embodiment, the electronic device 300 may include the light emitting element (not illustrated). For example, the light emitting element (not illustrated) may be disposed on the first surface 310A of the housing 310. The light emitting element (not illustrated) may provide state information of the electronic device 300 in the form of light. In another embodiment, the light emitting element (not illustrated) may provide a light source that operates in conjunction with operation of the first camera module 305. For example, the light emitting element (not illustrated) may include an LED, an IR LED, and/or a xenon lamp.

In an embodiment, the camera modules 305 and 312 (e.g., the camera module 180 of FIG. 1 and the camera module 400 of FIG. 4) may include the first camera module 305 (e.g., an under display camera) configured to receive light through the camera area 306 in the first surface 310A of the electronic device 300, the second camera module 312 configured to receive light through a partial area of the second surface 310B (e.g., a rear camera area 384 of FIG. 3C), and/or a flash 313.

In an embodiment, the first camera module 305 may include an under display camera (UDC) disposed on the rear surface of the display 301. For example, the first camera module 305 may be located in some layers of the display 301, or may be located such that an optical axis of a lens (e.g., the optical axis OA of FIG. 4) passes through the display area 310A and 310D of the display. In various embodiments, the first camera module 305 may be configured to receive light through the camera area 306 included in the display area 310A and 310D. For example, the camera area 306 may be configured to display contents like the other areas of the display area 310A and 310D when the first camera module 305 does not operate. For example, when the first camera module 305 operates, the camera area 306 may not display contents, and the first camera module 305 may receive light through the camera area 306.

In various embodiments (not illustrated), the first camera module 305 (e.g., a punch hole camera) may be exposed through a portion of the display area 310A and 310D of the display 301. For example, the first camera module 305 may be exposed on a partial area of the screen display area 310A and 310D through an opening formed in a portion of the display 301.

In an embodiment, the second camera module 312 may include a plurality of camera modules (e.g., a dual camera, a triple camera, or a quad camera). However, the second camera module 312 is not necessarily limited to including the plurality of camera modules and may include one camera module.

In an embodiment, the first camera module 305 and/or the second camera module 312 may include one or more lenses, an image sensor (e.g., the image sensor 230 of FIG. 2), and/or an image signal processor (e.g., the image signal processor 260 of FIG. 2). The flash 313 may include, for example, a light emitting diode or a xenon lamp. In another embodiment, two or more lenses (an infrared camera lens, a wide angle lens, and a telephoto lens) and image sensors may be disposed in the housing to face toward one surface (e.g., the second surface 310B) of the electronic device 300.

Referring to FIG. 3C, the electronic device 300 may include the side bezel structure 318, a first support member 340 (e.g., a bracket), the front plate 320 (e.g., the front plate 302 of FIG. 3A), a display 330 (e.g., the display 301 of FIG. 3A), a printed circuit board 350 (e.g., a printed circuit board (PCB), a flexible PCB (FPCB), or a rigid-flexible PCB (RFPCB)), a battery 352, a second support member 360 (e.g., a rear case), an antenna 370, and the back plate 380 (e.g., the back plate 311 of FIG. 3B). In some embodiments, the electronic device 300 may not include at least one component (e.g., the first support member 340 or the second support member 360) among the aforementioned components, or may additionally include other component(s). At least one of the components of the electronic device 300 may be identical or similar to at least one of the components of the electronic device 300 of FIG. 3A or 3B, and repetitive descriptions will hereinafter be omitted.

In an embodiment, the first support member 340 may be disposed inside the electronic device 300 and may be connected with the side bezel structure 318, or may be integrally formed with the side bezel structure 318. The first support member 340 may be formed of, for example, a metallic material and/or a nonmetallic (e.g., polymer) material. The display 330 may be coupled to, or located on, one surface of the first support member 340, and the printed circuit board 350 may be coupled to, or located on, an opposite surface of the first support member 340.

In an embodiment, a processor, memory, and/or an interface may be disposed on the printed circuit board 350. The processor may include, for example, one or more of a central processing unit, an application processor, a graphic processing unit, an image signal processor, a sensor hub processor, or a communication processor.

In an embodiment, the memory may include, for example, volatile memory or nonvolatile memory.

In an embodiment, the interface may include, for example, a high definition multimedia interface (HDMI), a universal serial bus (USB) interface, an SD card interface, and/or an audio interface. For example, the interface may electrically or physically connect the electronic device 300 with an external electronic device and may include a USB connector, an SD card/MMC connector, or an audio connector.

In an embodiment, the battery 352 may be a device for supplying power to at least one component of the electronic device 300. The battery 352 may include, for example, a primary cell that is not rechargeable, a secondary cell that is rechargeable, or a fuel cell. At least a portion of the battery 352, for example, may be disposed on substantially the same plane as the printed circuit board 350. The battery 352 may be integrally disposed inside the electronic device 300, or may be disposed to be detachable from the electronic device 300.

In an embodiment, the antenna 370 may be disposed between the back plate 380 and the battery 352. The antenna 370 may include, for example, a near field communication (NFC) antenna, a wireless charging antenna, and/or a magnetic secure transmission (MST) antenna. For example, the antenna 370 may perform short-range communication with an external device, or may wirelessly transmit and receive power required for charging. In another embodiment, an antenna structure may be formed by a portion of the side bezel structure 318 and/or a portion of the first support member 340, or a combination thereof.

In an embodiment, the first camera module 305 may be coupled to the rear surface of the display 330 to receive light through the camera area 306 of the front plate 320. For example, at least a portion of the first camera module 305 may be disposed on the first support member 340. For example, an image sensor of the first camera module 305 (e.g., the image sensor 230 of FIG. 2) may receive light passing through the camera area 306 and a pixel array included in the display 330. For example, the camera area 306 may at least partially overlap the display area on which contents are displayed. For example, the optical axis OA of the first camera module 305 may pass through a partial area of the display 330 and the camera area 306 of the front plate 320. For example, the partial area may include a pixel array including a plurality of light emitting elements. In an embodiment, a partial area of the display 330 that faces the first camera module 305 may be formed to be a transmissive area that has a specified transmittance as a portion of the display area where contents are displayed. In an embodiment, the transmissive area may be formed to have a transmittance of about 5% to about 25%. In an embodiment, the transmissive area may be formed to have a transmittance of about 25% to about 50%. In an embodiment, the transmissive area may be formed to have a transmittance of about 50% or more. The transmissive area may include an area through which light focused on an image sensor (e.g., an image sensor 230 of FIG. 2) to generate an image passes and that overlaps an effective area (e.g., a field of view (FOV)) of the first camera module 305. For example, the transmissive area of the display 330 may include an area having a lower pixel density and/or wiring density than a surrounding area.

In an embodiment, the second camera module 312 may be disposed such that a lens is exposed through the rear camera area 384 of the back plate 380 (e.g., the rear surface 310B of FIG. 2) of the electronic device 300. The rear camera area 384 may be formed in at least a portion of a surface of the back plate 380 (e.g., the rear surface 310B of FIG. 2). In an embodiment, the second camera area 384 may be formed to be at least partially transparent such that the second camera module 312 receives external light through the second camera area 384.

In an embodiment, at least a portion of the rear camera area 384 may protrude to a predetermined height from the surface of the back plate 380. However, without being necessarily limited thereto, the rear camera area 384 may form substantially the same plane as the surface of the back plate 380.

FIG. 4 is a perspective view of a camera module according to an embodiment.

The camera module 400 according to an embodiment may include a camera housing 410 and a lens assembly 440 (e.g., the lens assembly 210 of FIG. 2) at least partially accommodated in the camera housing 410. In an embodiment, the camera module 400 may be configured to receive external light through a partial area (e.g., the camera area 306 or the rear camera area 384 of FIG. 3C) of a surface of an electronic device (e.g., the electronic device 300 of FIGS. 3A, 3B and3C).

In an embodiment, the camera housing 410 may include a base 411 and a shield can 413. The shield can 413 may have, in the upper surface thereof, an opening 4131 through which a lens L and at least a portion of a lens barrel 442 are exposed. The opening 4131 may be at least partially aligned with the optical axis OA of the lens L. The shield can 413 and the base 411 may form an inner space in which the lens assembly 440 is disposed.

In various embodiments, an image sensor (e.g., the image sensor 230 of FIG. 2) and a circuit board electrically connected with the image sensor 230 may be disposed on the base 411 of the camera housing 410. In various embodiments, the image sensor 230 may be disposed to be at least partially aligned with the optical axis OA of the lens L. For example, the image sensor 230 may convert an optical signal received through the lens L into an electrical signal.

In an embodiment, at least a portion of the lens assembly 440 may be accommodated in the camera housing 410. For example, a portion of the lens assembly 440 may protrude outside the camera housing 410 through the opening 4131. In an embodiment, the lens assembly 440 may include a plurality of lenses L and the lens barrel 442 surrounding the lenses L.

In an embodiment, the camera housing 400 may be electrically connected with the electronic device (e.g., the electronic device 300 of FIG. 3C) through a connecting member 408. For example, the connecting member 408 may include a connector 409 coupled to a printed circuit board of the electronic device 300 (e.g., the printed circuit board 350 of FIG. 3C). In an embodiment, the connecting member 408 may include a circuit board including a flexible area that is at least partially flexible.

In various embodiments, the connecting member 408 may extend from the inner space of the camera housing 410 to the outside of the camera housing 410 (e.g., the printed circuit board 350 of FIG. 3C). For example, the connecting member 408 may include a flexible printed circuit board (FPCB).

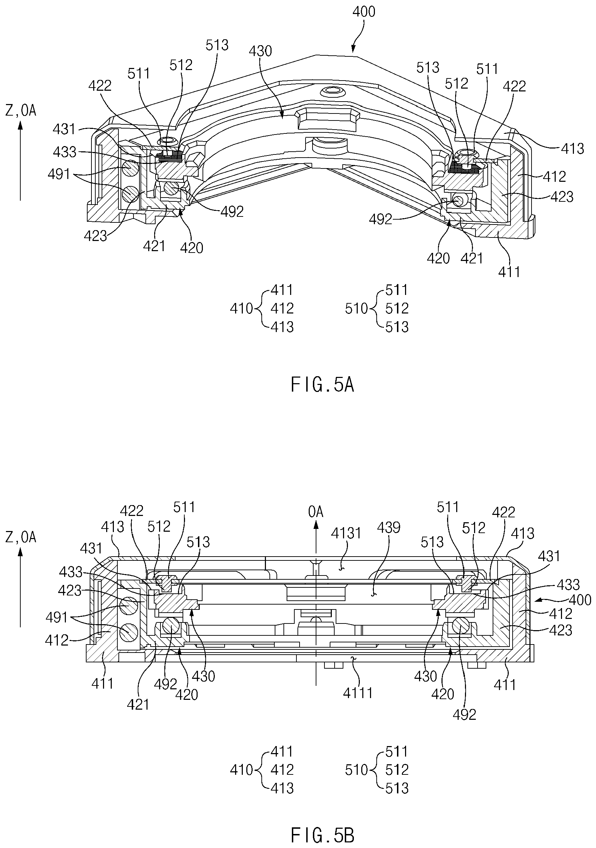

FIGS. 5A and 5B are sectional views of the camera module according to an embodiment.

Referring to FIGS. 5A and 5B, the camera module 400 may include the camera housing 410, a first carrier 420, and a second carrier 430.

In an embodiment, the camera housing 410 may include the shield can 413, a sidewall 412, and the base 411. The shield can 413, the sidewall 412, and the base 411 may form a space in which the first carrier 420 and the second carrier 430 are disposed. The shield can 413 may electromagnetically shield the camera module 400. One portion of the shield can 413 may be coupled to the sidewall, and another portion of the shield can 413 may be formed to face the base 411. The shield can 413 may have the first opening 4131 formed in the upper surface thereof. External light may travel to a lens (e.g., the lens L of FIG. 4) of a lens assembly (e.g., the lens assembly 440 of FIG. 4) through the first opening 4131. The base 411 may have a second opening 4111 formed therein through which an image sensor (e.g., the image sensor 230 of FIG. 2) and the lens L face each other. Light condensed by the lens L may travel to the image sensor 230 through the second opening 4111. In an embodiment, the sidewall 412 may be formed to surround the first carrier 420. At least one first ball 491 may be disposed between the sidewall 412 and the first carrier 420. The first ball 491 may provide a rolling frictional force when the first carrier 420 moves in the direction of the optical axis OA. For example, the first ball 491 may at least partially make contact with the sidewall 412 and a side surface 423 of the first carrier 420.

In an embodiment, the first carrier 420 may be disposed in the camera housing 410. The first carrier 420 may be surrounded by the sidewall 412. The at least one first ball 491 may make contact with the side surface 423 of the first carrier 420. In an embodiment, the second carrier 430 and at least a portion of the lens assembly (e.g., the lens assembly 440 of FIG. 4) mounted in the second carrier 430 may be disposed in the first carrier 420. The first carrier 420 may be provided in a form surrounding the lens assembly 440. For example, the first carrier 420 may have an opening area 439 formed therein in which at least a portion of the lens assembly 440 is disposed. In an embodiment, the first carrier 420 may move in the direction of the optical axis OA. When the first carrier 420 moves, the second carrier 430 and the lens assembly 440 that are disposed in the first carrier 420 may move together with the first carrier 420. As the first carrier 420 moves, the distance between the image sensor 230 and the lens L may vary.

In an embodiment, the first carrier 420 may include an upper surface 422, a lower surface 421, and the side surface 423. The lower surface 421 may at least partially face the base 411 of the camera housing 410. The at least one first ball 491 may be disposed between the side surface 423 and the sidewall 412 of the camera housing 410. The upper surface 422 may face a partial area of the shield can 413 of the camera housing 410 in the direction of the optical axis OA. In an embodiment, the upper surface 422 may limit a movement of the second carrier 430 in the direction of the optical axis OA. For example, a first stopper 511 may be disposed on the upper surface 422 to prevent and/or reduce the second carrier 430 from directly colliding with the upper surface 422. The first stopper 511 may be integrally formed with the upper surface 422, or may be coupled to the upper surface 422 as a separate structure. In an embodiment, at least one second ball 492 may be disposed on the lower surface 421. The second ball 492 may provide a rolling frictional force between the lower surface 421 and the second carrier 430 when the second carrier 430 moves in directions substantially perpendicular to the optical axis OA as an image correction function is performed. In an embodiment, the upper surface 422, the lower surface 421, and the side surface 423 may form a space in which the second carrier 430 is disposed. The upper surface 422 and the lower surface 421 may each have an opening area formed therein in which the lens assembly 440 is disposed.

In an embodiment, the second carrier 430 may be disposed in the first carrier 420. For example, the second carrier 430 may be at least partially surrounded by the upper surface 422, the lower surface 421, and the side surface 423 of the first carrier 420. The second carrier 430 may move in the directions substantially perpendicular to the optical axis OA in the inner space of the first carrier 420. The second carrier 430 may have the opening area 439 formed therein in which the lens assembly 440 is mounted. For example, the second carrier 430 may be provided in a ring shape. In an embodiment, as the image correction function is performed, the second carrier 430 may move together with the lens assembly 440 in the directions substantially perpendicular to the optical axis OA. The carrier 430 may be connected with the lower surface 421 of the first carrier 420 through the at least one second ball 492. For example, the second carrier 430 may at least partially make contact with the second ball 492.

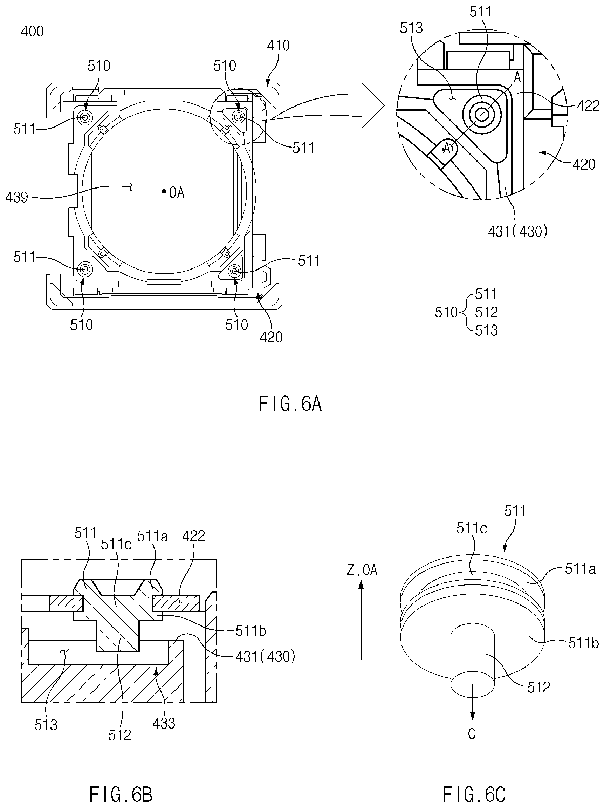

In an embodiment, a first damping structure 510 may include the first stopper 511, a first protrusion 512 protruding from the first stopper 511 toward the second carrier 430, a recessed area (e.g., a recessed area 433 of FIG. 6B) in which the first protrusion 512 is accommodated, and a damping material 513 filling the recessed area 433. The first damping structure 510 may be configured to attenuate the movement of the second carrier 430 when the image correction function is performed. Referring to the drawing, the first stopper 511 may at least partially overlap the recessed area 433 when viewed in the direction of the optical axis OA. For example, the first protrusion 512 formed on the first stopper 511 may at least partially make contact with the recessed area 433. In an embodiment, the recessed area 433 may be formed on a first surface of the second carrier 430 (e.g., a first surface 431 of FIG. 6B). For example, the recessed area 433 may be disposed around the opening area 439 in which the lens assembly 440 is mounted. The damping material 513 may be accommodated in the recessed area 433. The first protrusion 512 may be coupled to the damping material so as to be movable. For example, when the recessed area 433 moves together with the second carrier 430, the first protrusion 512 and the damping material 513 may provide damping to the second carrier 430. In an embodiment, the damping material 513 may attenuate an external impact transmitted to the second carrier 430. For example, when an external impact is transmitted to the camera module 400 in the state (e.g., an unpowered state) in which a constraint force is not provided to the second carrier 430, the second carrier 430 may move toward the upper surface 422 of the first carrier 420. The damping material 513 of the second carrier 430 may partially absorb the impact.

FIGS. 6A, 6B and 6C are views illustrating a first damping structure of the camera module according to an embodiment. FIG. 6A is a view of the camera module as viewed in the +z-axis direction, where the lens assembly is omitted from the camera module. FIG. 6B is a sectional view taken along line A-A of FIG. 6A. FIG. 6C is a view illustrating the stopper.

In an embodiment, the first damping structure 510 may include the first stopper 511 coupled to the upper surface 422 of the first carrier 420, the first protrusion 512 protruding from the first stopper 511 in the -z-axis direction, the recessed area 433 that is formed on the second carrier 430 and in which the first protrusion 512 is partially accommodated, and the damping material 513 accommodated in the recessed area 433.

Referring to FIG. 6A, the first stopper 511, when viewed in the direction of the optical axis OA, may at least partially overlap the recessed area 433 of the second carrier 430 or the damping material 513. For example, in a state in which an image correction function is not performed, the first stopper 511 may be located inside the boundary line of the recessed area 433 when viewed in the direction of the optical axis OA. For example, the first protrusion 512 may be located inside the boundary line of the recessed area 433. For example, when the position of the recessed area 433 is changed depending on a movement of the second carrier 430, a portion of the first stopper 511 may be located outside the boundary line of the recessed area 433, and the first protrusion 512 may be located inside the boundary line of the recessed area 433. In other words, the second carrier 430 may move relative to the first carrier 420 in the state in which the first protrusion 512 is located in the recessed area 433.

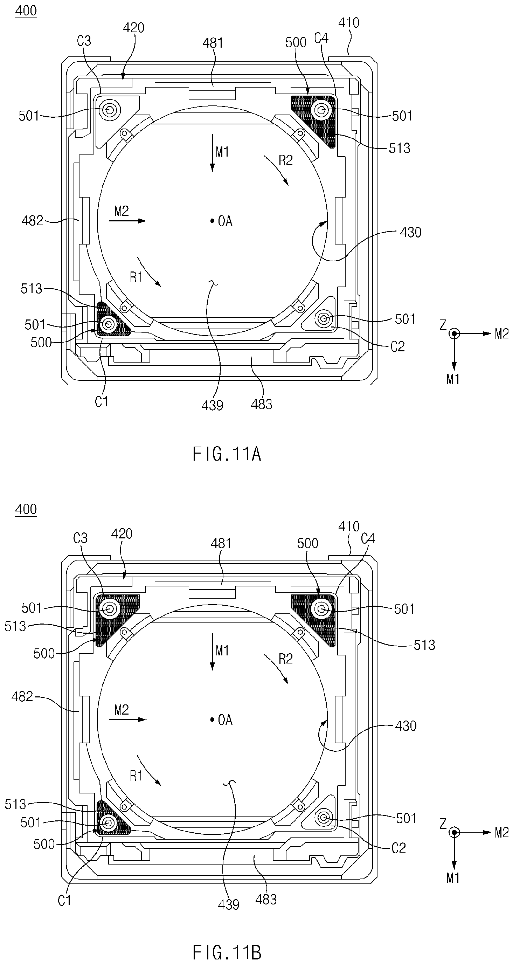

In an embodiment, the first damping structure 510 may be located on a corner portion of the camera module 400. For example, referring to FIG. 6A, the first damping structure 510 may be disposed on four corner portions. However, the first damping structure 510 is not limited to being disposed on the four corner portions. For example, referring to FIG. 11, the first damping structure 510 may be disposed on two corner portions or three corner portions.

Referring to the sectional view illustrated in FIG. 6B, the recessed area 433 may be recessed in the -z-axis direction from the first surface 431 of the second carrier 430. The first protrusion 512 may protrude in the -z-axis direction from the first stopper 511. At least a portion of the first protrusion 512 may be accommodated in the recessed area 433. A portion of the first protrusion 512 may be filled with the damping material 513. For example, an end portion of the first protrusion 512 may be coupled to the damping material 513. The coupling may not completely limit a relative movement of the first protrusion 512 and the recessed area 433. However, when the second carrier 430 moves, the coupling may provide damping to the movement of the second carrier 430.

Referring to FIG. 6C, the first stopper 511 may include a central portion 511c, a first extension 511a formed in the z-axis direction with respect to the central portion 511c, and a second extension 511b formed in the -z-axis direction with respect to the central portion 511c. The first extension 511a and the second extension 511b, when viewed in the z-axis direction, may have a larger area than the central portion 511c. A groove may be formed between the first extension 511a and the second extension 511b. The upper surface 422 of the first carrier 420 may be inserted into the groove. For example, the first stopper 511 may be coupled to the first carrier 420 such that at least a portion of the upper surface 422 of the first carrier 420 is located between the first extension 511a and the second extension 511b. In an embodiment, the first protrusion 512 may include a portion extending from the central portion 511c along the central axis C. The central axis C may be parallel to the optical axis OA. In various embodiments, the first stopper 511 may be inserted into the opening formed in the upper surface 422 of the first carrier 420 and may be coupled to the upper surface 422 of the first carrier 420 accordingly. However, the first stopper 511 and the first carrier 420 may be coupled by another method, or may be integrally formed with each other. Referring to the drawing, the first extension 511a and the second extension 511b are illustrated as having a circular cross-section. However, without being necessarily limited thereto, the first extension 511a and the second extension 511b may have various shapes.

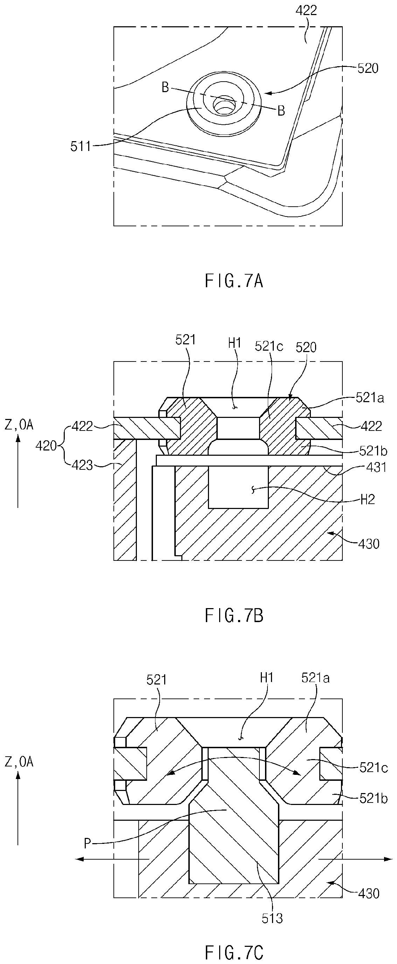

FIGS. 7A, 7B and 7C are diagrams a second damping structure of the camera module according to various embodiments. FIG. 7A is a view illustrating the second damping structure coupled to the upper surface of the first carrier. FIG. 7B is a sectional view taken along line B-B of FIG. 7A. FIG. 7C is a view illustrating a damping material when the second carrier moves.

Referring to FIGS. 7A, 7B and 7C, the second damping structure 520 may include a second stopper 521 having a first hole H1 formed therein, a second hole H2 formed in the second carrier 430, and the damping material 513 filling the first hole H1 and the second hole H2.

Referring to FIGS. 7A, 7B and 7C, the second stopper 521 may include a central portion 521c, a first extension 521a formed in the z-axis direction with respect to the central portion 521c, and a second extension 521b formed in the -z-axis direction with respect to the central portion 521c. The first extension 521a and the second extension 521b, when viewed in the z-axis direction, may have a larger area than the central portion 521c. A groove may be formed between the first extension 521a and the second extension 521b. The upper surface 422 of the first carrier 420 may be at least partially inserted into the groove. For example, the second stopper 521 may be coupled to the first carrier 420 such that at least a portion of the upper surface 422 of the first carrier 420 is located between the first extension 521a and the second extension 521b.

Referring to FIGS. 7A, 7B and 7C, the second stopper 521 may have the first hole H1 formed therein. The first hole H1 may be at least partially aligned with the second hole H2, which is formed in the first surface 431 of the second carrier 430, in the direction of the optical axis OA. For example, the first hole H1 may be formed through the central portion 521c of the second stopper 521. For example, the first hole H1 may be formed in the direction of the optical axis OA. The second hole H2 may be referred to as the recessed area 433 of FIG. 6.

Referring to FIGS. 7A, 7B and 7C, the damping material 513 may be injected into the second hole H2 through the first hole H1. The damping material 513 may fill the second hole H2 and may fill at least a portion of the first hole H1. For example, referring to FIG. 7C, the damping material 513 injected through the first hole H1 may be cured in the second hole H2 and the first hole H1 to form a portion P that protrudes from the first surface 431 of the second carrier 430 in the z-axis direction. Referring to FIG. 7C, when the second carrier 430 moves, the protruding portion P may move in the state in which a portion thereof is inserted into the first hole H1. As described above, the second damping structure 520 may provide damping to the movement of the second carrier 430.

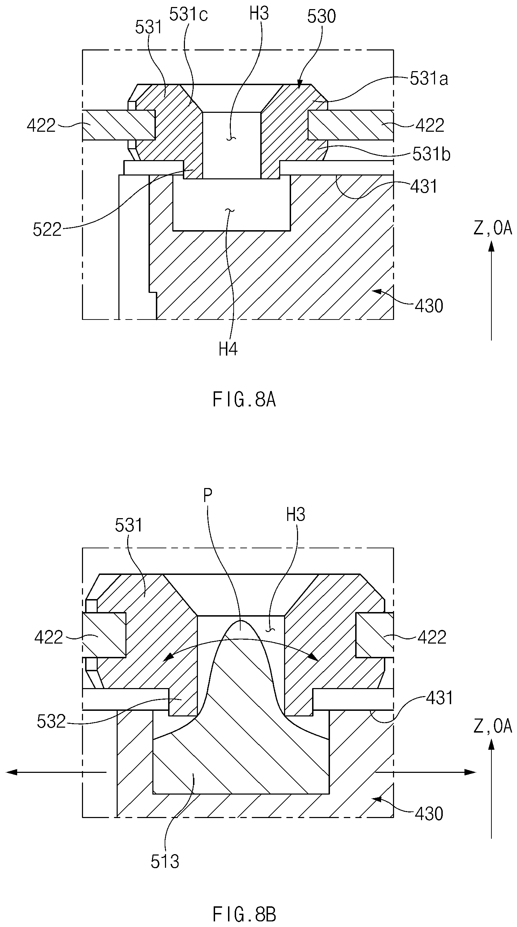

FIGS. 8A and 8B are diagrams illustrating a damping structure of the camera module according to various embodiments. FIG. 8A is a sectional view taken along line B-B of FIG. 7A. FIG. 8B is a sectional view illustrating a damping material when the second carrier moves.

In an embodiment, the third damping structure 530 may include a third stopper 531 that is coupled to the upper surface 422 of the first carrier 420 and that has a third hole H3 formed therein, a fourth hole H4 formed in the second carrier 430, and the damping material 513 at least partially filling the fourth hole H4 and the third hole H3. For example, the fourth hole H4 formed in the second carrier 430 may be referred to as the recessed area 433 of FIG. 6 or the second hole H2 of FIG. 7.

Referring to FIGS. 8A and 8B, the third stopper 531 may include a central portion 531c, a first extension 531a formed in the z-axis direction with respect to the central portion 531c, and a second extension 531b formed in the -z-axis direction with respect to the central portion 531c. The first extension 531a and the second extension 531b, when viewed in the z-axis direction, may have a larger area than the central portion 531c. A groove may be formed between the first extension 531a and the second extension 531b. The upper surface 422 of the first carrier 420 may be at least partially inserted into the groove. For example, the third stopper 531 may be coupled to the first carrier 420 such that at least a portion of the upper surface 422 of the first carrier 420 is located between the first extension 531a and the second extension 531b.

Referring to FIGS. 8A and 8B, the third stopper 531 may include a third protrusion 532 protruding from the second extension 531b toward the second carrier 430 (e.g., in the -z-axis direction). The third protrusion 532, when viewed on the section, may be at least partially accommodated in the fourth hole H4 of the second carrier 430. The third hole H3 may extend to pass through the central portion 531c and the third protrusion 532 of the third stopper 531 in the direction of the optical axis OA.

Referring to FIGS. 8A and 8B, the damping material 513 may be injected into the fourth hole H4 through the third hole H3. The damping material 513 may fill at least a portion of the third hole H3 and at least a portion of the fourth hole H4. For example, referring to FIG. 8B, the damping material 513 injected through the fourth hole H4 may be cured in the third hole H3 and the fourth hole H4 to form a protruding portion P at least partially located in the third hole H3 and the fourth hole H4. Referring to FIG. 8B, when the second carrier 430 moves, part of the protruding portion P may move in the state of being inserted into the third hole H3. The damping material 513 may provide damping to the movement of the second carrier 430 by absorbing part of a driving force of the second carrier 430.

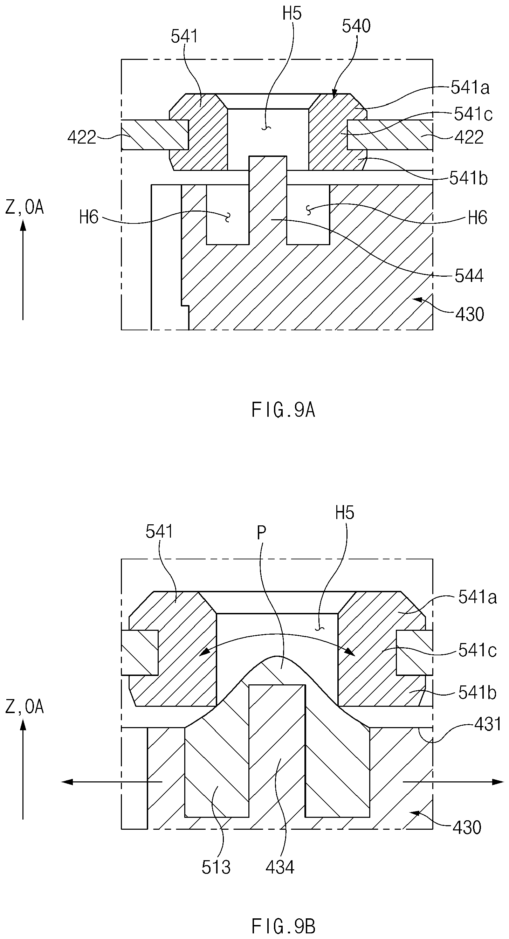

FIGS. 9A and 9B are a view illustrating a damping structure of the camera module according to various embodiments. FIG. 9A is a sectional view taken along line B-B of FIG. 7A. FIG. 9B is a view illustrating a damping material when the second carrier moves.

In an embodiment, the fourth damping structure 540 may include a fourth stopper 541 that is coupled to the upper surface 422 of the first carrier 420 and that has a fifth hole H5 formed therein, a sixth hole H6 formed in the second carrier 430, a fourth protrusion 544 extending from the inside of the sixth hole H6 to the inside of the fifth hole H5, and the damping material 513 at least partially filling the fifth hole H5 and the sixth hole H6. For example, the sixth hole H6 formed in the second carrier 430 may be referred to as the recessed area 433 of FIG. 6, the second hole H2 of FIG. 7, or the fourth hole H4 of FIG. 8.

Referring to FIGS. 9A and 9B, the fourth protrusion 544 may extend substantially in the z-axis direction and may be at least partially located in the fifth hole H5. Referring to FIG. 9B, the fourth protrusion 544 may be surrounded by the damping material 513 that at least partially fills the fifth hole H5 and the sixth hole H6.

Referring to FIGS. 9A and 9B, the fourth stopper 541 may include a central portion 541c, a first extension 541a formed in the z-axis direction with respect to the central portion 541c, and a second extension 541b formed in the -z-axis direction with respect to the central portion 541c. The first extension 541a and the second extension 541b, when viewed in the z-axis direction, may have a larger area than the central portion 541c. A groove may be formed between the first extension 541a and the second extension 541b. The upper surface 422 of the first carrier 420 may be at least partially inserted into the groove. For example, the fourth stopper 541 may be coupled to the first carrier 420 such that at least a portion of the upper surface 422 of the first carrier 420 is located between the first extension 541a and the second extension 541b.

Referring to FIGS. 9A and 9B, the fourth stopper 541 may have the fifth hole H5 formed therein. The fifth hole H5 may pass through the central portion 541c of the fourth stopper 541 in the direction of the optical axis OA (e.g., the z-axis direction). The fifth hole H5 may be at least partially aligned with the sixth hole H6, which is formed in the first surface 431 of the second carrier 430, in the direction of the optical axis OA. For example, referring to the drawing, the sixth hole H6 may be formed to be larger than the fifth hole H5.

Referring to FIGS. 9A and 9B, the damping material 513 may be injected into the sixth hole H6 through the fifth hole H5. The damping material 513 may fill at least a portion of the sixth hole H6 and at least a portion of the fifth hole H5. The damping material 513 may fill the fifth hole H5 after injected into the sixth hole H6. The damping material 513 may surround the fourth protrusion 544. For example, referring to FIG. 9B, the damping material injected through the fifth hole H5 may be cured on the outer surface of the fourth protrusion 544 to form a protruding portion P located in the fifth hole H5. Referring to FIG. 9B, when the second carrier 430 moves, part of the protruding portion P may move in the state of being inserted into the fifth hole H5. The damping material 513 may provide damping to the movement of the second carrier 430 by absorbing part of a driving force of the second carrier 430.

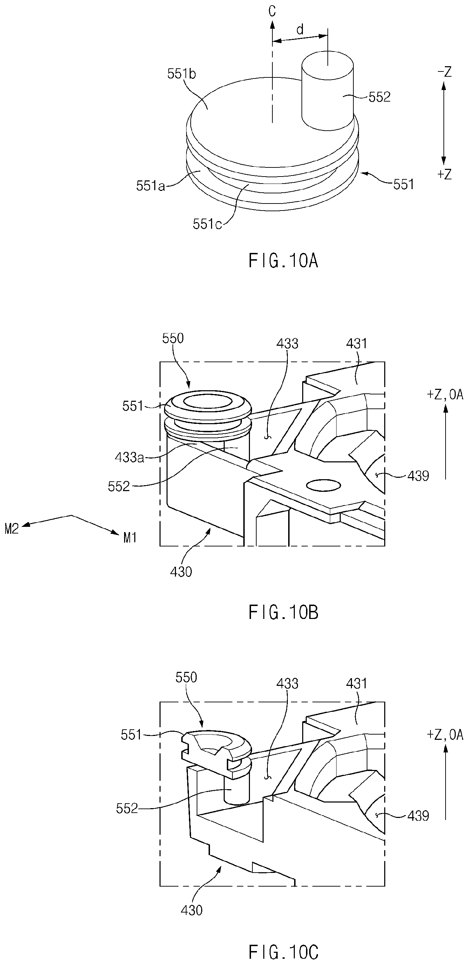

FIGS. 10A, 10B and 10C are diagrams illustrating a damping structure of the camera module according to various embodiments. FIG. 10A is a view illustrating a stopper. FIG. 10B is a view illustrating the stopper and the second carrier. FIG. 10C is a view illustrating sections of the stopper and the second carrier.

Referring to FIGS. 10A, 10B and 10C, the fifth damping structure 550 may include the fifth stopper 551 including a fifth protrusion 552, a recessed area 433 that is formed on the first surface 431 of the second carrier 430 and in which the fifth protrusion 552 is at least partially accommodated, and a damping material (not illustrated) (e.g., the damping materials 513 of FIGS. 5 to 9) that fills the recessed area 433. For example, the damping material may be coupled to the fifth protrusion 552.

Referring to FIG. 10A, the fifth stopper 551 may include a central portion 551c, a first extension 551a formed in the z-axis direction with respect to the central portion 551c, and a second extension 551b formed in the -z-axis direction with respect to the central portion 551c. The first extension 551a and the second extension 551b, when viewed in the z-axis direction, may have a larger area than the central portion 551c. A groove may be formed between the first extension 551a and the second extension 551b. As illustrated in FIGS. 6 to 9, the upper surface 422 of the first carrier 420 may be at least partially inserted into the groove.

Referring to FIG. 10A, the fifth protrusion 552 may be formed at a position spaced apart from the central axis C of the fifth stopper 551 by a specified distance d. For example, the fifth protrusion 552 may be eccentrically located relative to the central axis C by the specified distance d. For example, the central axis C may be referred to as the central axis C illustrated in FIG. 6C. In an embodiment, the fifth protrusion 552 may include a portion extending from the second extension 551b of the fifth stopper 551 in the -z-axis direction. The fifth stopper 551 may be coupled to the second carrier 430 such that the second extension 551b makes contact with a sidewall 433a of the recessed area 433 and at least a portion of the fifth protrusion 552 is located in the recessed area 433.

Referring to FIGS. 10B and 10C, the recessed area 433 may be recessed in the - z-axis direction from the first surface 431 of the second carrier 430. The recessed area 433 may be filled with the damping material 513, and the damping material 513 may be coupled to at least a portion of the fifth protrusion 552. For example, the damping material 513 may be coupled to a portion including an end portion of the fifth protrusion 552.

When an image correction function is performed, the second carrier 430 may move in a first axial direction M1 and/or a second axial direction M2, and the fifth stopper 551 may be fixed to the first carrier 420. The second carrier 430 may move in the first axial direction M1 and/or the second axial direction M2 in the state in which the fifth protrusion 552 of the fifth stopper 551 is located in the recessed area 433. In an embodiment, the damping material 513 filling the recessed area 433 may provide damping to the movement of the second carrier 430 by absorbing part of a driving force of the second carrier 430.

FIGS. 11A and 11B are diagrams illustrating camera modules according to various embodiments. FIG. 11A is a diagram illustrating a camera module including two damping structures. FIG. 11B is a diagram illustrating a camera module including three damping structures.

In an embodiment, the damping structures 500 may be disposed on corner portions of a second carrier 430 when the camera module 400 is viewed from above (e.g., when viewed in the direction of an optical axis OA). The damping structures 500 may be disposed on at least two corner portions.

The illustrated damping structure 500 may include at least one of the first damping structure 510 of FIGS. 5 and 6, the second damping structure 520 of FIG. 7, the third damping structure 530 of FIG. 8, the fourth damping structure 540 of FIG. 9, or the fifth damping structure 550 of FIG. 10 that has been described above. For example, a stopper 501 illustrated may include at least one of the first stopper 511, the second stopper 521, the third stopper 531, the fourth stopper 541, or the fifth stopper 551 that has been described above.

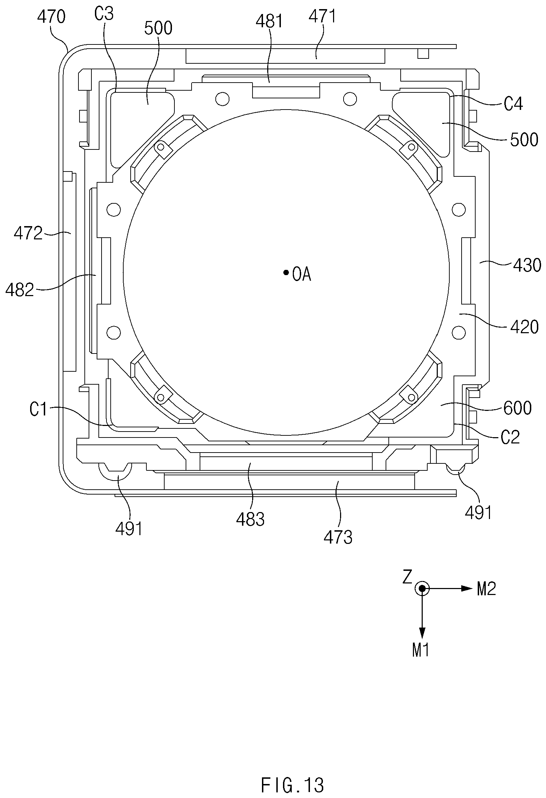

In an embodiment, the camera module 400 may include a third magnet 483 to move a first carrier 420 in a direction parallel to the optical axis OA. The third magnet 483 may be disposed on the first carrier 420, and a third coil (e.g., a third coil 473 of FIG. 13) corresponding to the third magnet 483 may be fixedly disposed on a sidewall (e.g., the sidewall 412 of FIG. 5) of a camera housing (e.g., the camera housing 410 of FIGS. 4 and 5).

In an embodiment, the camera module 400 may include a first magnet 481 and a second magnet 482 to move the second carrier 430 in a first axial direction M1 and a second axial direction M2 that are substantially perpendicular to the optical axis OA. The first magnet 481 and the second magnet 482 may be disposed to face directions substantially perpendicular to the optical axis OA. In an embodiment, the first magnet 481 and the second magnet 482 may be disposed on the second carrier 430. A first coil (e.g., a first coil 471 of FIG. 13) corresponding to the first magnet 481 and a second coil (e.g., a second coil 472 of FIG. 13) corresponding to the second magnet 482 may be disposed on the first carrier 420. In various embodiments, the first magnet 481 and the second magnet 482 may be disposed on the first carrier 420, and the first coil 471 and the second coil 472 may be disposed on the second carrier 430.

Referring to FIGS. 11A and 11B, the first magnet 481 may be disposed to face substantially the first axial direction M1, and the second carrier 430 may be moved in the first axial direction M1 by the first magnet 481.

Referring to FIGS. 11A and 11B, the second magnet 482 may be disposed to face substantially the second axial direction M2, and the second carrier 430 may be moved in the second axial direction M2 by the second magnet 482.

In an embodiment, when an image correction function is performed, driving forces may be applied to the second carrier 430 in the first axial direction M1 and the second axial direction M2. At this time, the second carrier 430 may be rotated. The rotary motion may obstruct the image correction function. To suppress the rotary motion R1 or R2, the camera module 400 may include the damping structures 500 disposed on the corner portions of the second carrier 430.

In an embodiment, the corner portions of the second carrier 430 may include a first corner portion C1 defined between the third magnet 483 and the second magnet 482, a second corner portion C2 located in the second axial direction M2 from the first corner portion C1, a third corner portion C3 defined between the second magnet 482 and the first magnet 481, and a fourth corner portion C4 located in the second axial direction M2 from the third corner portion C3.

Referring to FIG. 11A, the damping structures 500 may be disposed on two corner portions facing each other in the diagonal direction. For example, the damping structures 500 may be disposed on the first corner portion C1 and the fourth corner portion C4, or may be disposed on the second corner portion C2 and the third corner portion C3.

Referring to FIG. 11B, the damping structures 500 may be disposed on three corner portions. For example, the damping structures 500 may be disposed on the remaining corner portions C1, C3, and C4 other than the second corner portion C2. However, the number of damping structures 500 and the positions thereof are not limited to those illustrated in the drawing. For example, referring to FIG. 6, the damping structures 500 may be disposed on the four corner portions. In an embodiment, the driving force of the second carrier 430 may be further attenuated as the number of damping structures 500 is increased. Depending on the magnitude of the driving force (e.g., the sizes of coils and magnets), various numbers of damping structures 500 may be provided at various positions.

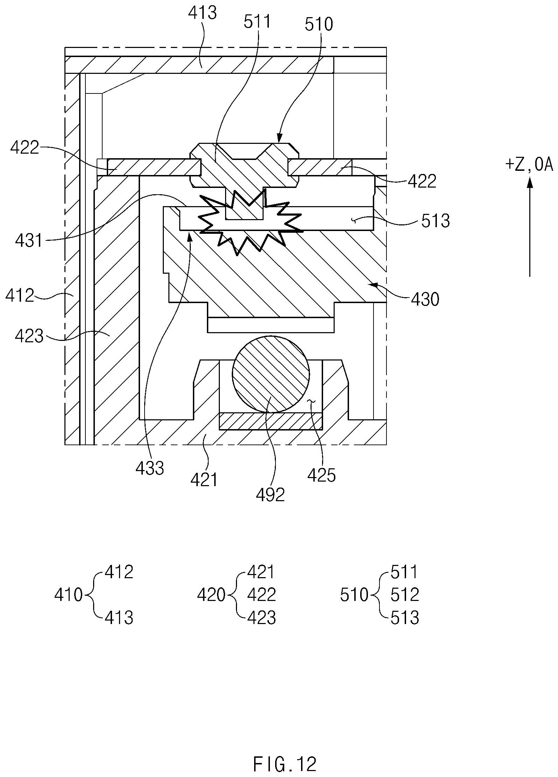

FIG. 12 is a view illustrating a buffer function of a damping structure of a camera module according to an embodiment.

Although only the first damping structure 510 is illustrated in FIG. 12, the following description may be identically or similarly applied to the second to fifth damping structures 520, 530, 540, and 550.

In an embodiment, the second carrier 430 of the camera module 400 may be coupled to the lower surface 421 of the first carrier 420 so as to be movable. For example, the second carrier 430 may at least partially make contact with the second ball 492 located on the lower surface 421 of the first carrier 420. The second carrier 430 may be pressed in the -z-axis direction to maintain the contact between the second carrier 430 and the second ball 492. The second carrier 430 may be spaced apart from the upper surface 422 of the first carrier 420 by a predetermined gap. In an embodiment, the second ball 492 may be at least partially accommodated in a recess 425 formed on the lower surface 421 of the first carrier 420.

In an embodiment, the position of the second carrier 430 may be constrained such that the second carrier 430 is at least partially brought into contact with the second ball 492 by magnets (e.g., the first magnet 481 and the second magnet 482 of FIG. 13) and/or coils (e.g., the first coil 471 and the second coil 472 of FIG. 13). In an embodiment, the position of the second carrier 430 may not be constrained depending on a state of the camera module 400 or the electronic device 300. For example, when power is not supplied to the camera module 400 or the electronic device 300, the second carrier 430 may freely move between the upper surface 422 and the lower surface 421 of the first carrier 420. When an external impact is applied to the camera module 400, the second carrier 430 may collide with the upper surface 422 of the first carrier 420, and the second carrier 430 and the lens assembly (e.g., the lens assembly 440 of FIG. 4) may be damaged.

In an embodiment, the camera module 400 may be configured to partially absorb an impact between the second carrier 430 and the upper surface 422 of the first carrier 420 through the first damping structure 510. For example, the first protrusion 512 may protrude from the first stopper 511 toward the recessed area 433 and may be coupled to the damping material 513 filling the recessed area 433. The damping material 513 may prevent and/or reduce damage to the second carrier 430 and the first carrier 420 by absorbing the impact between the second carrier 430 and the first carrier 420. Furthermore, the first protrusion 512 may prevent and/or reduce the second carrier 430 and the first carrier 420 from directly colliding with each other.

In an embodiment, when power is not supplied to the camera module 400 or the electronic device 300 or when an external impact is applied to the camera module 400, the first carrier 420 may freely move in the z-axis direction and may collide with the shield can 413. In an embodiment, the first stopper 511 of the camera module 400 may protrude from the upper surface 422 of the first carrier 420 in the +z-axis direction and may prevent and/or reduce the shield can 413 and the first carrier 420 from directly colliding with each other.

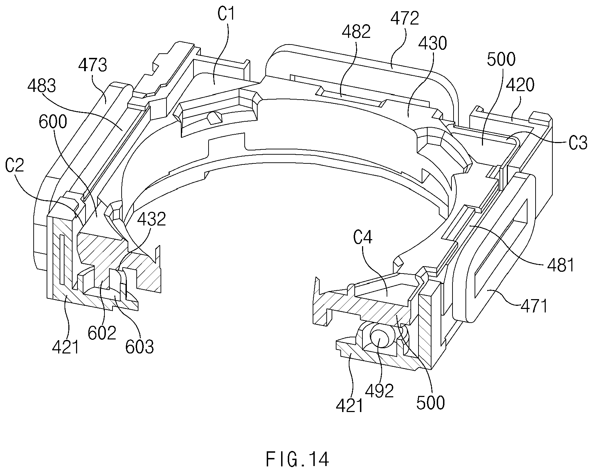

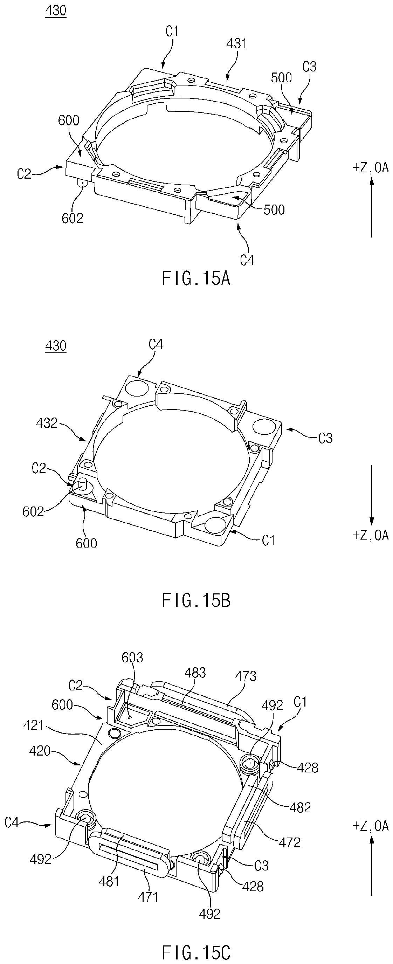

FIG. 13 is a plan view of a camera module according to various embodiments. FIG. 14 is a sectional view of the camera module according to various embodiments. FIGS. 15A, 15B and 15C are views illustrating a first carrier and a second carrier of the camera module according to various embodiments.

Referring to FIG. 13, the camera module 400 may include a first magnet 481 disposed on the second carrier 430 and configured to move the second carrier 430 in a first axial direction M1 substantially perpendicular to an optical axis OA, a second magnet 482 disposed on the second carrier 430 and configured to move the second carrier 430 in a second axial direction M2 substantially perpendicular to the optical axis OA and the first axial direction M1, and a third magnet 483 disposed on the first carrier 420 and configured to move the first carrier 420 in the direction of the optical axis OA.

In an embodiment, the camera module 400 may further include an FPCB 470 having a plurality of coils disposed thereon and at least partially surrounding the first carrier 420. The FPCB 470 may include a first coil 471 facing the first magnet 481, a second coil 472 facing the second magnet 482, and a third coil 473 facing the third magnet 483.

In an embodiment, the first coil 471 may electromagnetically interact with the first magnet 481. For example, an attractive force or a repulsive force that acts in the first axial direction M1 may be formed between the first coil 471 and the first magnet 481.

In an embodiment, the second coil 472 may electromagnetically interact with the second magnet 482. For example, an attractive force or a repulsive force that acts in the second axial direction M2 may be formed between the second coil 472 and the second magnet 482.

In an embodiment, the third coil 473 may electromagnetically interact with the third magnet 483. For example, an electromagnetic force that acts in the direction of the optical axis OA may be formed between the third coil 473 and the third magnet 483. The electromagnetic force may be referred to as the Lorentz force.

In an embodiment, the first magnet 481 and the third magnet 483 may be disposed to at least partially face each other in the first axial direction M1. The second magnet 482 may be disposed to face the second axial direction M2. In an embodiment, at least one first ball 491 may be disposed on corner portions C1 and C2 adjacent to the third magnet 483.

In an embodiment, the second carrier 430 may have four corner portions C1, C2, C3, and C4 defined therein. The first corner portion C1 and the second corner portion C2 may be defined as corners adjacent to the third magnet 483 and the third coil 473. The first corner portion C1 may be defined as a corner located in the first axial direction M1 from the third corner portion C3. The second corner portion C2 may be defined as a corner located in the first axial direction M1 from the fourth corner portion C4.

FIG. 15A is a view illustrating a first surface 431 of the second carrier 430, FIG. 15B is a view illustrating a second surface 432 of the second carrier 430, and FIG. 15C is a view illustrating the first carrier 420.

Referring to FIGS. 14, 15A, 15B and 15C, in an embodiment, a damping structure 500 may be disposed on at least one of the third corner portion C3 or the fourth corner portion C4. For example, the damping structure 500 may not be disposed on the first corner portion C1 and the second corner portion C2. The third magnet 483 may be larger in size than the first magnet 481 or the second magnet 482. Alternatively, the at least one first ball 491 may be disposed on opposite sides of the third magnet 483 (e.g., on the first corner portion C1 and the second corner portion C2). Due to this, a sufficient space in which the damping structure 500 is to be disposed may not be provided on the first corner portion C1 and the second corner portion C2.

In an embodiment, the camera module 400 may further include a sixth damping structure 600 disposed on at least one of the first corner portion C1 or the second corner portion C2. For example, referring to FIG. 14, the sixth damping structure 600 may be disposed on the second corner portion C2.

In an embodiment, the sixth damping structure 600 may include a second recessed area 603 formed on a lower surface 421 of the first carrier 420, a sixth protrusion 602 extending from the second surface 432 of the second carrier 430 into the second recessed area 603, and a damping material that fills the second recessed area 603 and that is coupled to the sixth protrusion 602.

In an embodiment, when the second carrier 430 moves, the sixth protrusion 602 may move together with the second carrier 430, and an end portion of the sixth protrusion 602 coupled to the damping material may be bent in response to the movement of the second carrier 430. Accordingly, the sixth damping structure 600 may provide damping to the movement of the second carrier 430.

Referring to FIGS. 14, 15A, 15B and 15C, unlike the other corner portions C1, C3, and C4, the second corner portion C2, on which the sixth damping structure 600 is disposed, may not have a second ball 492 disposed thereon. For example, a rolling frictional force for the second carrier 430 may be provided through second balls 492 that are disposed on the first corner portion C1, the third corner portion C3, and the fourth corner portion C4. For example, damping for the second carrier 430 may be provided through the damping structures 500 that are disposed on the third corner portion C3 and the fourth corner portion C4 and the sixth damping structure 600 disposed on the second corner portion C2. However, the arrangement of the damping structures 500 and the sixth damping structure is not limited to that illustrated in the drawing.

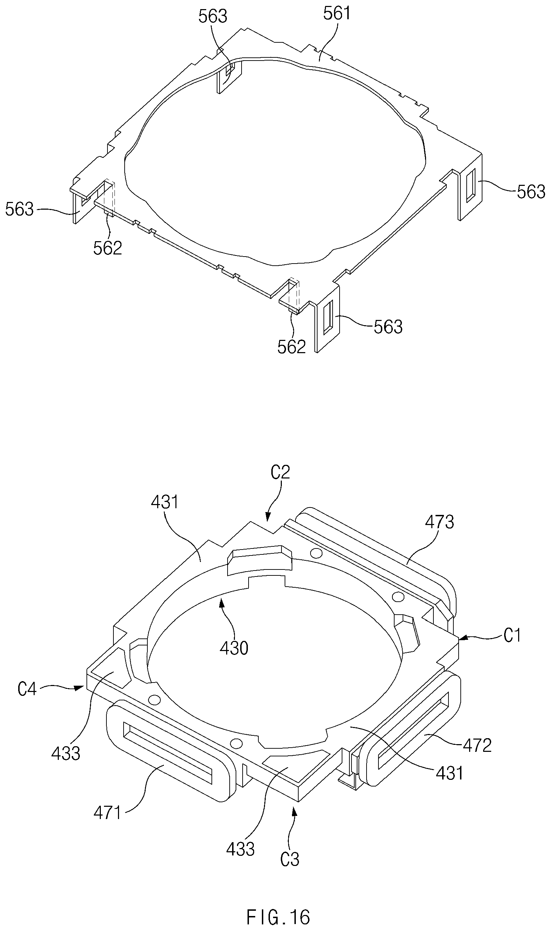

FIG. 16 is a view illustrating a damping structure of a camera module according to various embodiments.

Referring to FIG. 16, the seventh damping structure may include a fixed plate 561 fixedly disposed on a first carrier 420 and a seventh protrusion 562 that extends from the fixed plate 561 and that is accommodated in a recessed area 433 of a second carrier 430.

In an embodiment, the fixed plate 561 may include a coupling portion 563 coupled to the first carrier 420. The coupling portion 563 may have a slit formed therein into which a protrusion formed on a side surface of the first carrier 420 (e.g., a protrusion 428 of FIG. 15) is inserted. Accordingly, the fixed plate 561 may be fixed to the first carrier 420.

In an embodiment, the seventh protrusion 562 of the fixed plate 561 may be coupled to a damping material accommodated in the recessed area 433. When the second carrier 430 moves, the seventh protrusion 562 may be coupled to the damping material filling the recessed area 433 of the second carrier 430 and may provide damping to the movement of the second carrier 430.

A camera module according to an example embodiment of the disclosure may include: a camera housing, a first carrier at least partially disposed in the camera housing and configured to move in a direction of an optical axis, a second carrier at least partially disposed in the first carrier including a lens assembly, the second carrier being configured to move together with the first carrier in the direction of the optical axis based on an auto focus function being performed and to move relative to the first carrier in at least one direction perpendicular to the optical axis based on an image stabilization function being performed, and a damping structure configured to provide damping to the movement of the second carrier based on the image stabilization function being performed, wherein the damping structure may include a stopper disposed on an upper surface of the first carrier, a damping material located on a first surface of the second carrier that at least partially faces the upper surface, and a protrusion extending from the stopper to be at least partially coupled to the damping material.

In various example embodiments, the stopper may include: a first portion located between the upper surface of the first carrier and the camera housing; and a second portion located between the first surface of the second carrier and the upper surface of the first carrier.

In various example embodiments, the protrusion may include a portion extending from the second portion in the direction of the optical axis.

In various example embodiments, a central axis may be defined in the stopper when viewed in the direction of the optical axis, and the protrusion may extend to coincide with the central axis.

In various example embodiments, a central axis may be defined in the stopper when viewed in the direction of the optical axis, and the protrusion may be eccentrically located relative to the central axis by a specified gap.

In various example embodiments, based on the second carrier moving in a direction perpendicular to the optical axis, the stopper may be fixed to the first carrier, and the protrusion may be bent along the direction of movement of the second carrier.

In various example embodiments, the damping structure may include a recessed area formed on the first surface of the second carrier, and the damping material may be at least partially accommodated in the recessed area.

In various example embodiments, the stopper may have a through-hole formed therein to be at least partially aligned with the recessed area when viewed in the direction of the optical axis, and the damping material may be injected into the recessed area through the though-hole.

In various example embodiments, the damping material may form a protruding portion protruding from the recessed area, and the protruding portion may be at least partially located in the through-hole.

In various example embodiments, when viewed in the direction of the optical axis, the recessed area may be formed to be larger than the through-hole.

In various example embodiments, the protruding portion may comprise a cured damping material.

In various example embodiments, the damping structure may be disposed on two or more corner portions among corner portions defined in the second carrier.

In various example embodiments, the damping structure may be disposed on a first corner portion of the second carrier and a second corner portion facing the first corner portion in a diagonal direction.

In various example embodiments, the camera module may further include: a first magnet disposed on the second carrier configured to move the second carrier in a first axial direction perpendicular to the optical axis, a second magnet disposed on the second carrier and configured to move the second carrier in a second axial direction perpendicular to the optical axis and the first axial direction, and a third magnet disposed on the first carrier and configured to move the first carrier in the direction of the optical axis.

In various example embodiments, the first magnet and the third magnet may be disposed to at least partially face each other in the first axial direction.

In various example embodiments, a first corner portion and a second corner portion adjacent to the third magnet and a third corner portion and a fourth corner portion adjacent to the first magnet may be defined in the second carrier, and the damping structure may be disposed on the third corner portion and the fourth corner portion.

In various example embodiments, the camera module may further include: at least one first ball configured to provide a rolling frictional force between the first carrier and the camera housing based on the first carrier moving in the direction of the optical axis, and the at least one first ball may be disposed on each of the first corner portion and the second corner portion.

In various example embodiments, the camera module may further include: at least one second ball configured to provide a rolling frictional force between the first carrier and the second carrier based on the second carrier moving in a direction perpendicular to the optical axis, and the at least one second ball may be disposed on at least two of the first corner portion, the second corner portion, the third corner portion, and the fourth corner portion.

In various example embodiments, the camera module may further include: a second damping structure disposed on at least one of the first corner portion or the second corner portion, wherein the second damping structure may include a second recessed area formed on a lower surface of the first carrier, a second protrusion extending from a second surface of the second carrier into the second recessed area, and a damping material filling the second recessed area and coupled to the second protrusion.

In various example embodiments, the camera module may further include: a flexible printed circuit board (FPCB) having a plurality of coils disposed thereon and at least partially surrounding the first carrier, and the plurality of coils may include a first coil facing the first magnet, a second coil facing the second magnet, and a third coil facing the third magnet.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A camera module comprising:
a camera housing;
a first carrier at least partially disposed in the camera housing and configured to move in a direction of an optical axis;
a second carrier at least partially disposed in the first carrier, the second carrier including a lens assembly, wherein the second carrier is configured to move together with the first carrier in the direction of the optical axis based on an auto focus function being performed and to move relative to the first carrier in at least one direction perpendicular to the optical axis based on an image stabilization function being performed; and
a damping structure configured to provide damping to the movement of the second carrier based on the image stabilization function being performed,
wherein the damping structure includes:
a stopper disposed on an upper surface of the first carrier;
a damping material located on a first surface of the second carrier at least partially facing the upper surface; and
a protrusion extending from the stopper to be at least partially coupled to the damping material.

2. The camera module of claim 1, wherein the stopper includes a first portion located between the upper surface of the first carrier and the camera housing and a second portion located between the first surface of the second carrier and the upper surface of the first carrier.

3. The camera module of claim 2, wherein the protrusion includes a portion extending from the second portion in the direction of the optical axis.

4. The camera module of claim 1, wherein a central axis is defined in the stopper when viewed in the direction of the optical axis, and
wherein the protrusion extends to coincide with the central axis.

5. The camera module of claim 1, wherein a central axis is defined in the stopper when viewed in the direction of the optical axis, and
wherein the protrusion is eccentrically located relative to the central axis by a specified gap.

6. The camera module of claim 1, wherein based on the second carrier moving in a direction perpendicular to the optical axis, the stopper is fixed to the first carrier, and the protrusion is bent along the direction of movement of the second carrier.

7. The camera module of claim 1, wherein the damping structure includes a recessed area formed on the first surface of the second carrier, and
wherein the damping material is at least partially accommodated in the recessed area.

8. The camera module of claim 7, wherein the stopper has a through-hole formed therein, the through-hole being at least partially aligned with the recessed area when viewed in the direction of the optical axis, and
wherein the damping material is injected into the recessed area through the though-hole.

9. The camera module of claim 8, wherein the damping material forms a protruding portion protruding from the recessed area, and
wherein the protruding portion is at least partially located in the through-hole.

10. The camera module of claim 8, wherein when viewed in the direction of the optical axis, the recessed area is larger than the through-hole.

11. The camera module of claim 9, wherein the protruding portion comprises a cured damping material.

12. The camera module of claim 1, wherein the damping structure is disposed on two or more corner portions among corner portions defined in the second carrier.

13. The camera module of claim 12, wherein the damping structure is disposed on a first corner portion of the second carrier and a second corner portion facing the first corner portion in a diagonal direction.

14. The camera module of claim 1, wherein the camera module further comprises:
a first magnet disposed on the second carrier and configured to move the second carrier in a first axial direction perpendicular to the optical axis;
a second magnet disposed on the second carrier and configured to move the second carrier in a second axial direction perpendicular to the optical axis and the first axial direction; and
a third magnet disposed on the first carrier and configured to move the first carrier in the direction of the optical axis.

15. The camera module of claim 14, wherein a first corner portion and a second corner portion adjacent to the third magnet and a third corner portion and a fourth corner portion adjacent to the first magnet are defined in the second carrier,
wherein the damping structure is disposed on the third corner portion and the fourth corner portion,
wherein the camera module further comprises a second damping structure disposed on at least one of the first corner portion or the second corner portion, and
wherein the second damping structure includes a second recessed area formed on a lower surface of the first carrier, a second protrusion extending from a second surface of the second carrier into the second recessed area, and a damping material configured to fill the second recessed area and coupled to the second protrusion.
